# EUROPÄISCHE PATENTSCHRIFT

(11) **EP 1 184 273 B1**
(45) Veröffentlichungstag und Bekanntmachung des Hinweises auf die Patenterteilung: **07.12.2005**
(21) Anmeldenummer: 01203316.3
(22) Anmeldetag: 04.09.2001
(51) Int. Cl.: B62K 9/00, B62J 1/08, B62K 15/00

(54) **Stuhlbefestigung**
Seat mounting
Fixation de siège

(30) Priorität: 04.09.2000 NL 1016096
(43) Veröffentlichungstag der Anmeldung: 06.03.2002
(73) Patentinhaber: Van Ee, Teunis Karel, 3771 MB Barneveld (NL)
(72) Erfinder: Van Ee, Teunis Karel, 3771 MB Barneveld (NL)
(74) Vertreter: Ferguson, Alexander

(56) Entgegenhaltungen:
- EP-A- 0 997 373
- US-A- 4 327 929
- US-A- 5 020 624

## Beschreibung

Die Erfindung bezieht sich auf einen (Kinder)Go-Kart oder Tretauto mit einem Stuhl der auf lösbare Weise an dem Chassis befestigt ist, auf einer einer Anzahl möglichen Stellen, so daß der Abstand Stuhl - Pedale / Lenkstange variabel ist und stufenweise auf den Benutzer des Tretautos abgestellt werden kann.

Es ist bekannt um ein Stuhl eines Tretautos an der Unterseite mit einem rechten, viereckigen Rohr zu versehen, das selektiv in viereckige auf einem Längsbalken des Chassis vorgesehene Löcher gesteckt werden kann. Obwohl der Stuhl hiermit einfach versetzt werden kann, hat dieses bekannte System den Nachteil, daß der Stuhl infolge des Spielraums zwischen dem viereckigen Rohr und den Löchern in Längsrichtung und auch in Querrichtung des Tretautos hin und wieder wackeln kann. Der Benutzer empfindet dieses Wackeln, das infolge des Verschleißes im Laufe der Zeit zunimmt, als unangenehm, ebenso wie das dadurch verursachte Geräusch.

Eher ist vorgeschlagen, um dem durch das Wackeln verursachten Geräusch entgegenzutreten, mittels einer in den Löchern angeordneten Kunststoffmanschette. Hiermit wird die Wackelbewegung an sich jedoch nicht verhütet. Weiter ist ein Nachteil, daß die Manschetten eine zusätzliche Maßnahme bilden, die auch zusätzliche Montagehandlungen beansprucht.

Weiter ist aus US-A- 5,020,624 ein Motorroller mit einem abnehmbaren Sitz bekannt, wobei der Sitz mit einem rechten/zylinderförmigen Stiel, welcher in einem von einer Anzahl komplementärer höcher in dem chassis des Motorrollers aufnehmbar ist, versehen ist.

Die Erfindung hat als Aufgabe hierin zumindest auf einigen Punkten Verbesserung zu bringen, und verschafft dazu ein Go-Kart oder Tretauto gemäss Anspruch 1. Hiermit wird auf einfache Weise in der genannten Vertikalfläche eine spielraumfreie Passung von Ausragung und Loch versichert, auch auf die Dauer.

Vorzugsweise läuft die Ausragung zumindest in einem Durchschnitt gemäß einer die Längsachse enthaltenden Vertikalfläche abwärts konisch zu, so daß wackeln nach vorne und hinten verhütet wird, insbesondere bei beschleunigen und bremsen.

In einer einfach herzustellenden und wartungsarmen Ausführung ist darin vorgesehen, daß die Aufnahmeräume in einem hohlen Längsbalken des Chassis gebildet sind, welcher Längsbalken eine Oberwand hat, worin erste Löcher zu den Aufnahmeräumen gebildet sind, sowie eine Unterwand, worin zweite Löcher gebildet sind, wobei die ersten Löcher eine Länge in Längsachserichtung haben, die größer ist als die der zweiten Löcher.

Die Form der Ausragung ist sehr einfach und leicht aus einer (Stahl)platte herzustellen, wenn gemäß einer Vorzugsausführung die Ausragung in einem Durchschnitt gemäß einer quer auf der Längsachse stehenden Vertikalfläche durch parallele Vertikalflächen begrenzt wird.

Wackelbewegung in Querrichtung kann entgegengetreten werden wenn die Quer- oder Endränder der Löcher via schräge Randteile in ihre Längsränder übergehen. Es kann dann die Rede sein von - in Horizontalschnitt betrachtet - einem Punktkontakt im Bereich der Ecken der Ausragung.

Wackelbewegung in Querrichtung kann alternativ - oder dabei weiter - verhütet werden wenn die Ausragung zumindest in einem Durchschnitt gemäß einer quer auf der Längsachse stehenden Vertikalfläche abwärts konisch zuläuft.

Die Ausragung kann in Horizontalschnitt unrund sein, um Verdrehung entgegenzutreten. Alternativ kann bei einem Kreisschnitt ein Querstift zum gegen Drehung Festlegen der Ausragung benutzt werden. Die Ausragung kann dann hauptsächlich die Form eines (abgestumpften) Kegels - mit kreisförmigem oder ovalem Durchschnitt - haben. In dem Fall einer Kegelform wird zu allen Seiten Wackel- oder Kippstabilität erhalten sein.

In einer zweiten vorteilhaften Ausführung hiervon hat die Ausragung in Horizontalschnitt eine Kreuzform.

In einer dritten vorteilhaften Ausführung hiervon bildet die Ausragung in Horizontalschnitt zumindest nahezu einen Rechteck.

In einer weiteren Entwicklung der Stuhlbefestigung gemäß der Erfindung ist die Längsabmessung der Aufnahmeräume größer als ihre Querabmessung. Hierbei wird der in Längsrichtung vorhandene Raum für Vergrößerung der Angriffslänge und damit der Stabilität benutzt.

In dem Go-Kart gemäß der Erfindung kann weiter auf Unterteile, wie einen zusätzlichen Balken für die Stuhlbefestigung, erspart werden, wenn die Aufnahmeräume in dem Hauptbalken des Chassis vorgesehen sind.

Die Einführung der Ausragung und damit die Aufstellung des Stuhles wird gefördert wenn die Ausragung am unteren Ende abgerundet ist.

Bemerkt wird, daß es möglich ist, daß die konischen oder aber konvergierenden Linien oder Begrenzungen von Ausragung und/oder Aufnahmeraum kontinuierlich oder aber diskontinuierlich laufen können.

Die Erfindung wird an Hand einer Anzahl in den beigefügten Zeichnungen wiedergegebene Zeichnungen erläutert werden.

Gezeigt wird in:
Figur 1 eine schematische Wiedergabe eines Beispielsystems gemäß der Erfindung eines Stuhles und Chassisbalkens von einem Go-Kart oder Tretauto, worin der Stuhl zu befestigen ist;
Figur 2 eine Ansicht teilweise in Durchschnitt eines Unterteils von dem Stuhl von Figur 1 und des vorgenannten Chassisbalkens;
Figur 3 ein Detail des Systems der Figuren 1 und 2 in montierter Lage;
Figur 4 eine Wiedergabe der Unterseite des Befestigungsteils eines Stuhles gemäß den Figuren 1 und 2 und eine schematische Wiedergabe einer alternativen Entwicklung eines Loches für Stuhlbefestigung an dem Chassisbalken;
Figur 5 eine erste alternative Ausführung von einer Stuhlbefestigung und Aufnahmelöchern; und
Figur 6 eine zweite alternative Ausführung davon.

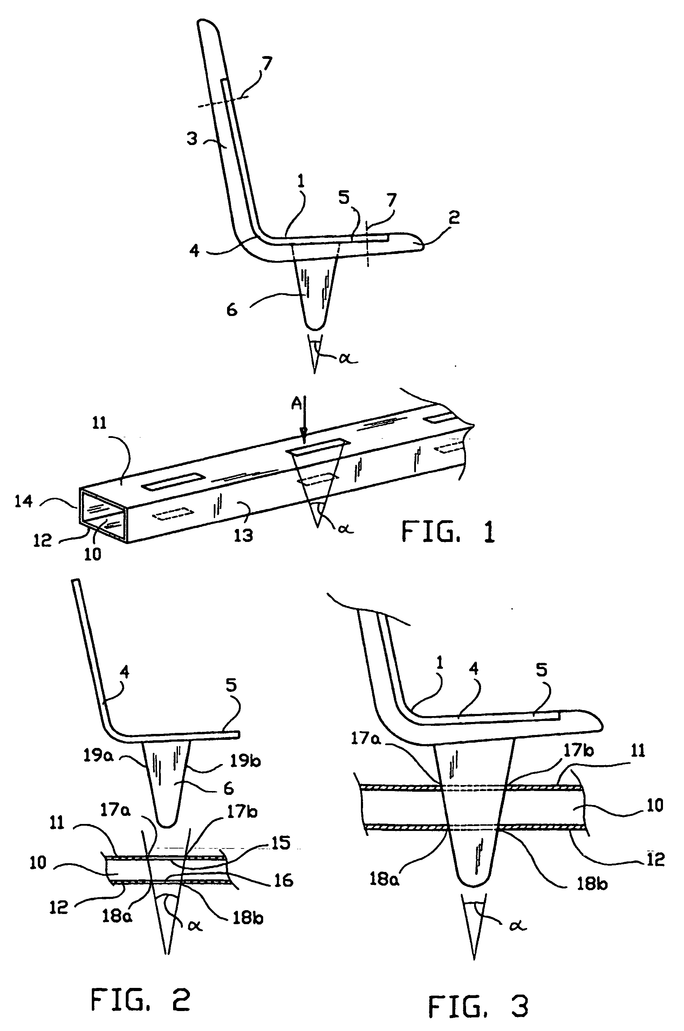

In Figur 1 ist der Stuhl von einem weiter nicht wiedergegebenen Go-Kart oder Tretauto wiedergegeben. Der Stuhl 1 besteht hauptsächlich aus einem aus Kunststoff hergestellten Stuhl, mit einem Sitz 2 und einer Rückenlehne 3. Wiedergegeben ist, daß der Sitz 2 und Rückenlehne 3 nach hinten und nach unten einen hohlen Raum bilden, und daß gegen die Hinterseite eine komplementär gebildete Stahlplatte 4 mittels Schraubverbindungen 7 befestigt ist. Die stählerne Stützplatte 4 hat ein Horizontalteil 5, das gegen die Unterseite der Sitzung 2 liegt und selbst an der Unterseite mit einer daran geschweißten, abwärts herausragenden Stahlplatte 6 versehen ist. Diese Platte 6 hat, wie in Figur 2 zu sehen ist, einen Hinterrand 10a und einen Hinterrand 19b, die miteinander einen Winkel von α einschließen.

Der Chassisbalken 10 kann den Hauptträger von dem Chassis eines Go-Karts bilden. Es wird hierbei hauptsächlich die mit Treppenkraft anzutriebenden Go-Karts betreffen, insbesondere von Anmelderin bekannt und unter der registrierten Marke Mammoet lieferbar.

Der Chassisbalken 10 ist ein Kastenträger mit einer Oberwand 11, einer Unterwand 12 und Seitenwändern 13, 14. In der Oberwand 11 ist eine Anzahl Schlitze 15 gemacht, und in der Unterwand 12 eine Anzahl Schlitze 16. Jedes Paar Schlitze 15, 16 bildet eine mögliche Stelle zur Befestigung des Stuhles 1.

In den Figuren 1 und 2 ist wiedergegeben, daß die Schlitze 15 ein wenig länger sind als die Schlitze 16, so daß einerseits die Endränder 17a und 18a von Schlitzen 15 und 16 und andererseits die Endränder 17b und 18b davon Linien bestimmen, die ebenfalls einen Winkel von α einschließen. Diese Linien stehen vorzugsweise jede unter einem Winkel bezüglich der Vertikale.

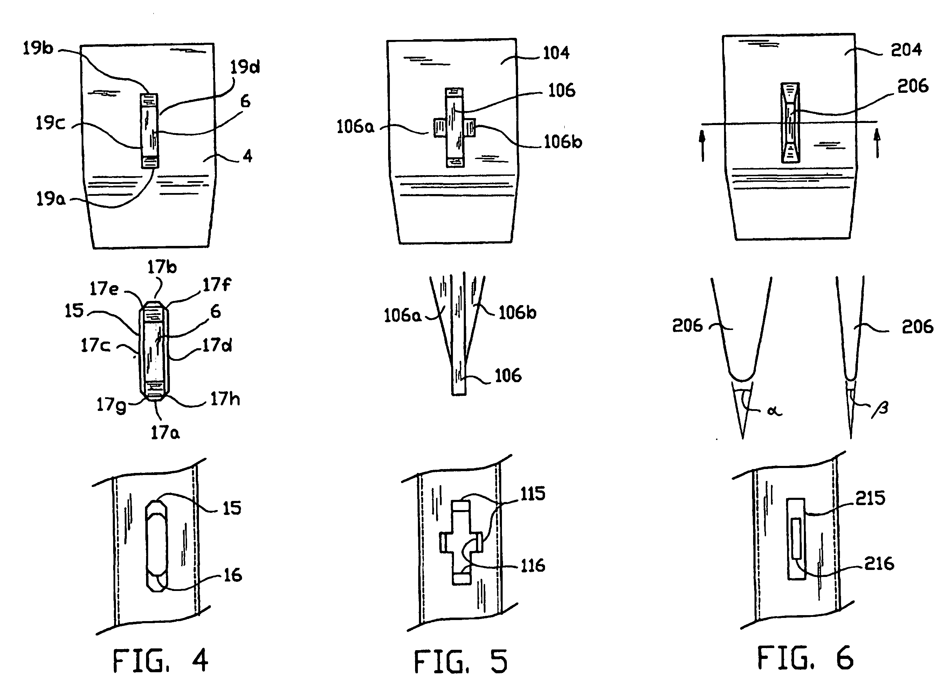

Wenn der Stuhl mit Platte 6 abwärts in die Richtung A in einen gewählten Satz Löcher 15, 16 niedergelassen wird, wird die Platte 6 abwärts durch das Loch 15 und darauf durch das Loch 16 bewegen, bis die Lage von Figur 3 erhalten ist. Dort berühren die Ränder 19a und 19b der Platte 6 beziehungsweise die Endränder 17a, 17b vom Loch 15 und die Endränder 18a, 18b vom Loch 16. Damit ist schon eine mehr oder weniger genaue Passung erhalten. Wenn der Benutzer auf dem Stuhl 1 Platz nimmt, wird die Gewichtskraft die Passung und also Anschluß vervollständigen. Damit ist auf einfache und effektive Weise eine Kippbewegung des Stuhles um eine Achse senkrecht auf der Zeichnungsfläche verhütet.

In Figur 4 ist wiedergegeben, wie auch Kippung um eine Achse quer auf der vorhergenannten Achse entgegengetreten werden kann. Hierzu ist darin vorgesehen, daß das Loch 15 nicht nur Hinterrand 17a und Vorderrand 17b und Seitenränder 17c und 17d hat, aber auch im Bereich der Winkel schräge Seiten 17e-17h. Eingezeichnet ist, daß die Winkel zwischen den Rändern 19a, 19b und Seiten 19c, 19d der Platte 6 mit den schrägen Rändern 17e-17h Kontakt machen können, um so Kippbewegung um zwei senkrecht aufeinander stehende horizontale Achsen zu verhüten. Das Loch 16 wird gleichförmig sein, so daß auch da von (Ecke)Punktkontakten die Rede sein wird.

In Figur 5 ist eine alternative Möglichkeit für das Entgegentreten von Kippung um beide vorhergenannten Achsen wiedergegeben. Die gebogene Platte 104 ist hier mit einer abwärts reichenden Stahlplatte 106 versehen, die jedoch mit zwei, sowohl an der Platte 106 wie auch an der Platte 104 geschweißten schrägen Plattenteilen 106a, 106b ausgebreitet ist, so daß in Unteransicht eigentlich eine Art Kreuz gebildet wird, wovon die Beine, von unten nach oben, schräg zulaufen. Die Löcher 115 und 116 in dem Balken 110 sind ähnlich gebildet, daß heißt, daß die Endränder vom kreuzförmigen Loch 115 und 116 in einem Durchschnitt in einer die Längsachse des Go-Karts enthaltenden Vertikalfläche wieder einen Winkel von α mit einander machen und in einer Vertikalfläche senkrecht darauf einen Winkel β, einiges gemäß den Rändern der Platte 106 und der Platten 106a, 106b.

Eine weitere alternative Entwicklung ist in Figur 6 wiedergegeben, worin die Stahlplatte 204 wiedergegeben ist, mit daran geschweißter abwärts reichender Platte 106, die nicht nur in Seitenansicht konisch unter einem Winkel α zuläuft, aber in einem Durchschnitt quer darauf auch unter einem Winkel β konisch zuläuft. Die Löcher 215 und 216 sind ähnlich gebildet, so daß ihre Ränder auch die vorhergenannten Winkel α beziehungsweise β einschließen.

## Patentansprüche

1. Go-Kart oder Tretauto mit einem Chassis und einem lösbar auf dem Chassis zu befestigenden Stuhl(1), wobei das Chassis mit einer sich in der Längsachse des Chassis erstreckenden Reihe an der unterseite geöffneten Aufnahmeräume versehen ist und der Stuhl mit einer abwärts gerichteten Ausragung (6, 106, 206) versehen ist, die passend in den Aufnahmeräumen aufgenommen werden kann und die zumindest in einer vertikalen Schnittfläche mit aneinander entgegengesetzt gelegenen Randgebieten, die auf abwärts unter einem Winkel bezüglich einander konvergierenden Linien liegen, versehen ist, und wobei jeder Aufnahmeraum mit Begrenzungen mit gegenübereinander gelegenen Randgebieten, die in derselben Vertikalfläche auf unter demselben Winkel konvergierenden Linien liegen, versehen ist.

2. Go-Kart oder Tretauto gemäß Anspruch 1, wobei die Randgebiete die auf einer Linie liegen da entlang auf Abstand voneinander gelegen sind.

3. Go-Kart oder Tretauto gemäß Anspruch 1 oder 2, wobei beide Linien einen Winkel mit der Vertikale einschließen.

4. Go-Kart oder Tretauto gemäß einem der vorabgehenden Ansprüche, wobei die Ausragung (6, 106, 206) zumindest in einer vertikalen Schnittfläche abwärts konisch zuläuft und damit komplementär ist an jedem Aufnahmeraum in derselben Schnittfläche betrachtet.

5. Go-Kart oder Tretauto gemäß einem der vorabgehenden Ansprüche, wobei die Ausragung (6, 106, 206) zumindest in einem Durchschnitt gemäß einer die Längsachse enthaltenden Vertikalfläche abwärts konisch zuläuft.

6. Go-Kart oder Tretauto gemäß einem der vorabgehenden Ansprüche, wobei die Aufnahmeräume in einem hohlen Längsbalken (10) vom Chassis gebildet sind, welcher Längsbalken (10) eine Oberwand (1) hat, worin erste Löcher (15) zu den Aufnahmeräumen gebildet sind, sowie eine Unterwand (12), worin zweite Löcher (16) gebildet sind, wobei die ersten Löcher (15) eine Länge in Längsachserichtung haben, die größer ist als die der zweiten Löcher (16).

7. Go-Kart oder Tretauto gemäß Anspruch 5 oder 6, wobei die Ausragung (6) in einem Durchschnitt gemäß einer quer auf der Längsachse stehenden Vertikalfläche durch parallele Vertikalflächen begrenzt wird, wobei vorzugsweise die Quer- oder Endränder (17a, 17b) der Löcher (15, 16) via schräge Randteile in ihre Längsränder übergehen.

8. Go-Kart oder Tretauto gemäß einem der vorabgehenden Ansprüche, wobei die Ausragung (106, 206) zumindest in einem Durchschnitt gemäß einer quer auf der Längsachse stehenden Vertikalfläche abwärts konisch zuläuft.

9. Go-Kart oder Tretauto gemäß Anspruch 8, wobei die Ausragung (106) in Horizontalschnitt eine Kreuzform hat.

10. Go-Kart oder Tretauto gemäß Anspruch 8, wobei die Ausragung (206) in Horizontalschnitt zumindest nahezu ein Rechteck bildet.

11. Go-Kart oder Tretauto gemäß Anspruch 8, wobei die Ausragung (206) in Vertikalschnitt kegelförmig ist, wobei der Kegel vorzugsweise einen unrunden Durchschnitt hat.

12. Go-Kart oder Tretauto gemäß einem der vorhergehenden Ansprüche, wobei die Längsabmessung der Aufnahmeräume größer ist als ihre Querabmessung.

13. Go-Kart oder Tretauto gemäß einem der vorhergehenden Ansprüche, wobei die Aufnameräume in einem Hauptbalken (10) des Chassis vorgesehen sind.

14. Go-Kart oder Tretauto gemäß einem der vorhergehenden Ansprüche, wobei die Ausragung (6, 206) am unteren Ende abgerundet ist.

## Claims

1. Go-Kart or pedal car having a chassis and a seat (1) which can be releasably attached onto the chassis, wherein the chassis is provided with a series of receiving spaces which are open at their lower side, said series extending in the longitudinal axis of the chassis, wherein the seat is provided with a downwardly extending protrusion (6, 106, 206), which can be fitted in the receiving spaces and which is provided with edge areas which at least in a vertical cross sectional plane are located opposite one another, said edge areas being located on lines that downwardly converge with respect to one another at an angle, and wherein each receiving space is provided with boundaries comprising edge areas which are located opposite one another, said edge areas being located in the same vertical plane on lines that converge at the same said angle.

2. Go-Kart or pedal car according to claim 1, wherein the edge areas that are located along a line are spaced from one another along that line.

3. Go-Kart or pedal car according to claim 1 or 2, wherein both lines include an angle with the vertical.

4. Go-Kart or pedal car according to one of the preceding claims, wherein the protrusion (6, 106, 206) downwardly tapers in at least one vertical cross section plane and complements therewith with each receiving space, considered in the same cross sectional plane.

5. Go-Kart or pedal car according to one of the preceding claims, wherein the protrusion (6, 106, 206) at least in one cross section according to a vertical plane comprising the longitudinal edges tapers downwardly.

6. Go-Kart or pedal car according one of the preceding claims, wherein the receiving spaces are formed in a hollow longitudinal beam (10) of the chassis, which longitudinal beam (10) has a upper wall (1) wherein first holes (15) to the receiving spaces have been formed, as well as a lower wall (12) wherein second holes (16) have been formed, wherein the first holes (15) have a length in direction of the longitudinal axis, which length is larger than the corresponding length of the second holes (16).

7. Go-Kart or pedal car according to claim 5 or 6, wherein the protrusion (6) in a cross section according to a vertical plane transverse to the longitudinal axis is limited by parallel vertical planes, wherein preferably the transverse or end edges (17a, 17b) of the holes (15, 16) merge into their longitudinal edges by inclined edge portions.

8. Go-Kart or pedal car according to one of the preceding claims, wherein the protrusion (106, 206) at least in a cross section according to a vertical plane transverse to the longitudinal axis tapers downwardly.

9. Go-Kart or pedal car according to claim 8, wherein the protrusion (106) has a cross shape in horizontal section.

10. Go-Kart or pedal car according to claim 8, wherein the protrusion (206) forms at least substantially a rectangle in horizontal section.

11. Go-Kart or pedal car according to claim 8, wherein the protrusion (206) is cone shaped in vertical section, wherein, preferably, the cone has a non-round cross section.

12. Go-Kart or pedal car according to one of the preceding claims, wherein the longitudinal dimension of the receiving spaces is larger then their transverse dimensions.

13. Go-Kart or pedal car according to one of the preceding claims, wherein the receiving spaces has been provided in a main beam (10) of the chassis.

14. Go-Kart or pedal car according to one of the preceding claims, wherein the protrusion (6, 206) is rounded at its lower end.

## Revendications

1. Kart ou voiture à pédales comprenant un châssis et un siège (1) à fixer de manière amovible sur le châssis, où le châssis est doté d'une rangée - s'étendant sur l'axe longitudinal du châssis - d'espaces de logement ouverts sur le dessous, et le siège est doté d'une partie saillante (6, 106, 206) dirigée vers le bas, laquelle partie saillante peut être logée en s'ajustant dans les espaces de logement et qui, au moins dans une surface de coupe verticale, est dotée de zones périphériques placées à l'opposé les unes des autres, zones périphériques qui se trouvent sur des lignes convergentes l'une vers l'autre vers le bas, en formant un angle, et où chaque espace de logement est doté des limites ayant de zones périphériques placées à l'opposé les unes des autres, lesquelles zones périphériques se trouvent, dans la même surface verticale, sur des lignes convergentes suivant le même angle.

2. Kart ou voiture à pédales selon la revendication 1 ou 2, où les zones périphériques alignées sont placées en étant à distance les unes des autres.

3. Kart ou voiture à pédales selon la revendication 2, où les deux lignes forment un angle avec la verticale.

4. Kart ou voiture à pédales selon l'une quelconque des revendications précédentes, où la partie saillante (6, 106, 206) se termine en pointe de façon conique vers le bas, au moins dans une surface de coupe verticale et, par conséquent, est considérée comme étant complémentaire au niveau de chaque espace de logement, dans la même surface de coupe.

5. Kart ou voiture à pédales selon l'une quelconque des revendications précédentes, où la partie saillante (6, 106, 206) se termine en pointe de façon conique vers le bas, au moins dans un plan d'intersection selon une surface verticale contenant l'axe longitudinal.

6. Kart ou voiture à pédales selon l'une quelconque des revendications précédentes, où les espaces de logement sont formés dans une poutre longitudinale creuse (10) du châssis, laquelle poutre longitudinale (10) comprend une paroi supérieure (11) dans laquelle sont formés des premiers trous (15) prévus pour les espaces de logement, ainsi qu'une paroi inférieure (12) dans laquelle sont formés des seconds trous (16), où les premiers trous (15), dans le sens de l'axe longitudinal, ont une longueur qui est plus grande que celle des seconds trous (16).

7. Kart ou voiture à pédales selon la revendication 5 ou 6, où la partie saillante (6) est délimitée par des surfaces verticales parallèles, dans un plan d'intersection conformément à une surface verticale placée de façon transversale par rapport à l'axe longitudinal, où les bords transversaux ou les bords d'extrémités (17a, 17b) des trous (15, 16) deviennent leurs bords longitudinaux, via des parties périphériques obliques.

8. Kart ou voiture à pédales selon l'une quelconque des revendications précédentes, où la partie saillante (106, 206) se termine en pointe de façon conique vers le bas, au moins dans un plan d'intersection conformément à une surface verticale placée de façon transversale par rapport à l'axe longitudinal.

9. Kart ou voiture à pédales selon la revendication 8, où la partie saillante (106), en coupe horizontale, a une forme de croix.

10. Kart ou voiture à pédales selon la revendication 8, où la partie saillante (206), en coupe horizontale, forme au moins presque un rectangle.

11. Kart ou voiture à pédales selon la revendication 8, où la partie saillante (206), en coupe verticale, est en forme de cône où le cône a, de préférence, une section non circulaire.

12. Kart ou voiture à pédales selon l'une quelconque des revendications précédentes, où la dimension longitudinale des espaces de logement est plus grande que leur dimension transversale.

13. Kart ou voiture à pédales selon l'une quelconque des revendications précédentes, où les espaces de logement sont prévus dans une poutre principale (10) du châssis.

14. Kart ou voiture à pédales selon l'une quelconque des revendications précédentes, où la partie saillante (6, 206) est arrondie au niveau de l'extrémité inférieure.
